# EUROPÄISCHE PATENTSCHRIFT

(11) **EP 2 457 752 B1**
(45) Veröffentlichungstag und Bekanntmachung des Hinweises auf die Patenterteilung: **24.08.2016**
(21) Anmeldenummer: 11188419.3
(22) Anmeldetag: 09.11.2011
(51) Int. Cl.: B60D 1/46

(54) **Kupplungsvorrichtung und Anhängevorrichtung für Zugfahrzeuge**
Coupling device and trailer device for traction vehicles
Dispositif d'embrayage et dispositif d'attelage pour véhicules tracteurs

(30) Priorität: 25.11.2010 DE 102010060811
(43) Veröffentlichungstag der Anmeldung: 30.05.2012
(73) Patentinhaber: GKN Walterscheid GmbH, 53797 Lohmar (DE)
(72) Erfinder: Afflerbach, Henning F., 44227 Dortmund (DE)
(74) Vertreter: Müller, Thomas Michael

(56) Entgegenhaltungen:
- EP-A1- 0 843 956
- EP-A1- 2 100 757
- US-A- 3 708 183
- US-A- 4 103 928

## Beschreibung

Die Erfindung betrifft eine Kupplungsvorrichtung nach dem Oberbegriff des Anspruchs 1.

Eine solche Kupplungsvorrichtung ist aus der EP 0 446 598 A1 bekannt. Die dort beschriebene Anhängevorrichtung weist einen Kupplungsbock mit zwei Führungswangen auf, die Führungsnuten umfassen, wobei der Kupplungsträger höhenverstellbar in den Führungsnuten aufgenommen ist. Der Kupplungsträger ist plattenförmig gestaltet und vertikal ausgerichtet, wobei der plattenförmige Kupplungsträger in den Führungsnuten verschiebbar geführt ist. Über Verriegelungsbolzen, die seitlich aus dem Kupplungsträger herausragen und axial verstellbar sind, ist der Kupplungsträger in Verriegelungsausnehmungen der Führungsnuten verriegelbar. Im verriegelten Zustand werden alle Zugkräfte, die von einem an der Anhängekupplung angekoppelten Anhänger auf die Anhängevorrichtung ausgeübt werden, von dem Kupplungsträger auf die Führungsnuten übertragen. Ferner werden alle Stützkräfte in vertikaler Richtung über die Verriegelungsbolzen in die Führungsnuten bzw. die Führungswangen übertragen. Somit müssen alle Kräfte von den Bauteilen des Kupplungsbocks übernommen werden, die die Führungsnuten bilden. Eine Kupplungsvorrichtung ähnlicher Bauart zeigen EP 2 100 751 A1 und US 4 103 928.

Andere herkömmliche Kupplungsböcke sind derart gestaltet, dass der Kupplungsträger plattenförmig gestaltet ist und mit Führungswangen eines Kupplungsbocks verschweißt sind. Hierbei ist der Kupplungsträger horizontal ausgerichtet und unten mit den Führungswangen verbunden. Vorteil dieser Ausführungsform ist, dass der Kupplungsträger mit dem Kupplungsbock eine Einheit bildet und aufgrund der festen Verbindung hohe Zugkräfte und Stützkräfte aufnehmen kann. Jedoch kann der Kupplungsträger und somit die Anhängerkupplung nicht ausgetauscht werden.

Aufgabe der vorliegenden Erfindung ist es, eine Vorrichtung vorzuschlagen, bei der unterschiedlich Anhängekupplungen, wie z. B. Bolzenkupplungen oder Pitonkupplungen, wahlweise verwendet werden können und die hohe Kräfte aufnehmen kann.

Die Aufgabe wird erfindungsgemäß durch eine Anhängevorrichtung gemäß Anspruch 1 gelöst. Bevorzugte Ausführungsbeispiele ergeben sich aus den Unteransprüchen.

Durch die lösbare Verbindung des Kupplungsträgers mit dem Kupplungsbock können unterschiedliche Kupplungsträger eingesetzt werden, die jeweils eine andere Anhängekupplung aufweisen. Somit können Anhängekupplungen z. B. in Form von Kugelkupplungen, Pitonkupplungen, etc., mit dem Kupplungsbock verwendet werden. Die Stützelemente, die in den Führungsnuten des Kupplungsbocks befestigt sind, dienen lediglich zur vertikalen Abstützung des Kupplungsträgers, so dass diese die vertikal auf sie einwirkenden Stützkräfte aufnehmen. Vorzugsweise sind sie derart gestaltet, dass der Kupplungsträger sowohl vertikal nach unten als auch vertikal nach oben abgestützt sind. Somit nehmen die Stützelemente positive wie auch negative Stützkräfte auf. Diese Stützkräfte werden dann über die Führungsnuten in den Kupplungsbock eingeleitet. Die horizontalen Zugkräfte, ebenfalls positiv oder negativ, werden an einer anderen Stelle über den Kupplungsträger in den Kupplungsbock eingeleitet. Die Einleitung dieser Kräfte findet nicht über die Führungsnuten statt. Die Zugkräfte können z. B. unmittelbar in den Kupplungsbock an Stellen in diesen eingeleitet werden, in denen der Kupplungsbock besonders verstärkt ausgebildet ist. Somit ist eine Entkopplung der Aufnahmen für die vertikalen Stützkräfte und die horizontalen Zugkräfte gegeben, die den Kupplungsbock an unterschiedlichen Positionen belasten und somit für eine höhere Lebensdauer sorgen.

Ferner kann der Kupplungsträger prinzipiell auch vollständig vom Kupplungsbock entfernt werden, wozu auch die Stützelemente aus den Führungsnuten entfernt werden. In diesem Fall sind keine bauraumbegrenzenden Bauteile mehr vorgesehen, wobei die Führungsnuten ebenfalls frei von Bauteilen sind, so dass andere Kupplungselemente an dem Kupplungsbock uneingeschränkt befestigt werden können.

Üblicherweise sind in standarisierten Kupplungsböcken in den Führungsnuten in Reihe übereinander angeordnete Verriegelungsbohrungen vorgesehen. Die Stützelemente sind hierbei vorzugsweise jeweils in zumindest einer der Verriegelungsbohrungen lösbar befestigt. Hierzu können die Stützelemente jeweils einen Bolzen aufweisen, der durch eine der Verriegelungsbohrungen hindurchgeführt ist. Vorzugsweise ist der Bolzen als Gewindebolzen ausgestaltet, der an einem von der Führungsnut abgewandten Ende aus dem Kupplungsbock herausragt und mit einer Gewindemutter gesichert ist.

Die Stützelemente können jeweils einen Führungsabschnitt aufweisen, mit dem sie in einer der Führungsnuten verdrehsicher sitzen. Der Führungsabschnitt ist hierbei leistenförmig gestaltet, wobei dieser in die Führungsnut eingreift, so dass das Stützelement gegen Verdrehung, insbesondere um die Achse des Bolzens, gesichert ist.

Die Stützelemente weisen jeweils eine horizontal und parallel zur Fahrtrichtung verlaufende Nut auf, wobei die Nuten der beiden Stützelemente einander zugewandt sind. In die Nuten ist der Kupplungsträger eingeführt. Bei der Montage wird jeweils ein Stützelement in eine der Führungsnuten eingesetzt und befestigt. Danach wird der Kupplungsträger, der plattenförmig gestaltet und horizontal ausgerichtet ist, in die Nuten der Stützelemente in Fahrtrichtung betrachtet nach vorne eingeschoben und anschließend an einem vorderen Ende mit dem Kupplungsbock lösbar befestigt.

Um ein mögliches seitliches Spiel des Kupplungsträgers innerhalb der Nuten zu beseitigen, weisen die Stützelemente jeweils ein Justierelement auf, das horizontal verstellbar ist und in die Nut des Stellelements hineinragt. Das Justierelement kann in unterschiedlichen Positionen gegenüber dem Stützelement festgelegt werden, wobei es unterschiedlich weit in die Nut hineinragt, so dass das Justierelement gegen den Kupplungsträger in Anlage ist und die beiden gegenüberliegenden Justierelemente der beiden Stützelemente den Kupplungsträger in den Nuten zentrieren und seitlich abstützen sowie eventuell vorhandenes Spiel minimiert.

Die Justierelemente umfassen vorzugsweise jeweils einen Gewindeabschnitt, der durch eine Gewindebohrung des Stützelements geschraubt ist, wobei die Gewindebohrung mit einer der Verriegelungsbohrungen der Führungsnuten, in der das jeweilige Stützelement sitzt, fluchtet. Somit ist das Justierelement durch die mit diesem fluchtenden Verriegelungsbohrung zugänglich und kann mittels eines Werkzeugs verstellt werden. Vorzugsweise weist das Justierelement hierzu Angriffsmittel für ein Werkzeug, z. B. einen Innensechskant, auf.

Vorzugsweise umfasst der Kupplungsbock zwei jeweils eine der Führungsnuten aufweisende Führungswange, die an einem in Fahrtrichtung betrachtet vorderen Bereich über eine Strebe miteinander verbunden sind, wobei der Kupplungsträger an der Strebe lösbar befestigt ist.

Der Kupplungsträger kann hierbei über eine reibschlüssige oder eine formschlüssige Verbindung mit dem Kupplungsbock, insbesondere der Strebe, lösbar verbunden sein. Die Verbindung ist hierbei derart ausgebildet, dass sie horizontale Kräfte abstützt. Zur Erzielung einer reibschlüssigen Verbindung kann der Kupplungsträger mit dem Kupplungsbock verschraubt sein, wobei Befestigungsschrauben durch vertikal angeordnete Befestigungsbohrungen hindurchgeführt sind. Ebenso kann eine formschlüssige Verbindung dadurch erzielt werden, dass an dem Kupplungsträger Vorsprünge vorgesehen sind, die in Nuten des Kupplungsbocks, oder umgekehrt, vorgesehen sein, die axial zueinander in Anlage gehalten sind.

Ein bevorzugtes Ausführungsbeispiel einer erfindungsgemäßen Anhängevorrichtung ist im folgenden anhand der Zeichnungen näher erläutert.

Hierin zeigt
- Figur 1: eine perspektivische Explosionsdarstellung einer erfindungsgemäßen Anhängevorrichtung;
- Figur 2: eine Rückansicht der Anhängevorrichtung gemäß Figur 1;
- Figur 3: eine Seitenansicht der Anhängevorrichtung gemäß Figur 1 teilweise geschnitten, und
- Figur 4: eine perspektivische Darstellung eines Stützelements.

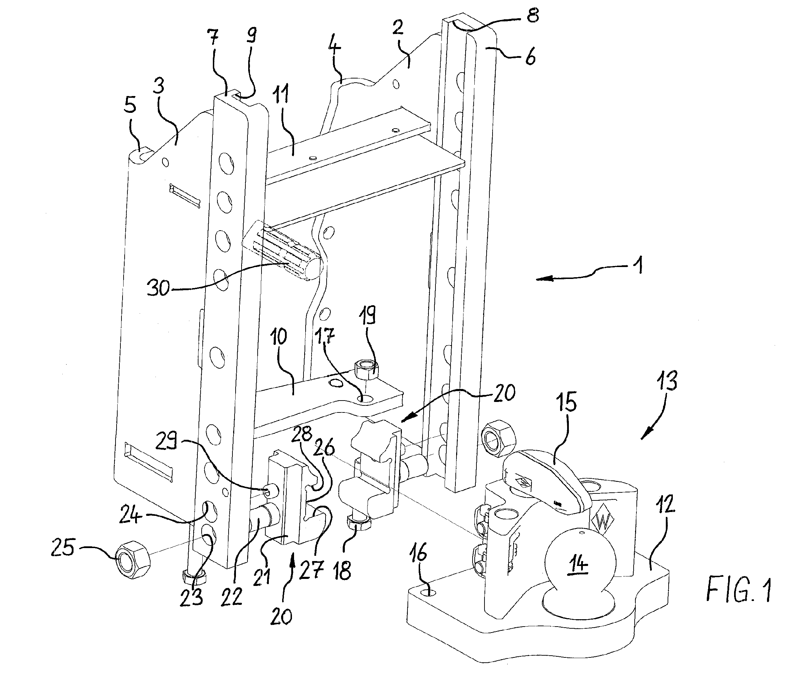

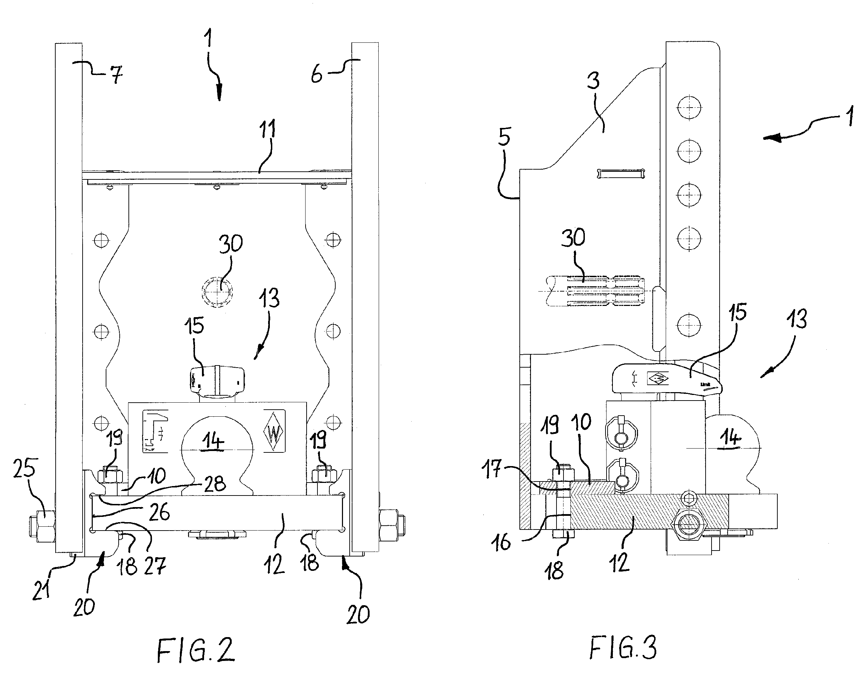

Die Figuren 1 bis 3 zeigt eine erfindungsgemäße Anhängevorrichtung in unterschiedlichen Darstellungen und werden im folgenden zusammen beschrieben. Diese umfasst einen Kupplungsbock 1, der eine rechte Führungswange 2 und eine linke Führungswange 3 aufweist. Der Kupplungsbock 1 wird am Heck eines Zugfahrzeugs im Bereich einer Zapfwelle 30 montiert und dient zum Befestigen von Anhängekupplungen zum Ankuppeln von Anhängern, die vom Zugfahrzeug zu ziehen sind. Die beiden Führungswangen 2, 3 sind plattenförmig gestaltet und jeweils vertikal ausgerichtet. Ferner erstrecken sie sich in Fahrtrichtung F eines Zugfahrzeugs, an dem der Kupplungsbock 1 befestigbar ist. Zum Befestigen des Kupplungsbocks 1 an einem Zugfahrzeug weisen die beiden Führungswangen 2, 3 jeweils abgewinkelte Befestigungsabschnitte 4, 5 auf, mit denen die Führungswangen 2, 3 an dem Führungsfahrzeug (hier nicht dargestellt) befestigt werden können. Die beiden Führungswangen 2, 3 weisen jeweils eine Führungsleiste 6, 7 auf, die vertikal ausgerichtet sind und an einem in Fahrtrichtung F hinteren Ende der Führungswangen 2, 3 mit diesem verbunden sind. Die Führungsleisten 6, 7 weisen jeweils eine Führungsnut 8, 9 auf, die ebenfalls vertikal ausgerichtet sind und die einander zugewandt sind. Ferner weisen die Führungsleisten 6, 7 jeweils eine Reihe von Verbindungsbohrungen 23, 24 auf, die durch die Führungsleisten 6, 7 hindurch verlaufen und in die Führungsnuten 8, 9 münden. Die Verbindungsbohrungen 23, 24 dienen dazu, verschiedene Kupplungselemente an dem Kupplungsbock, ggf. in unterschiedlichen Höhenlagen, befestigen zu können.

Die beiden Führungswangen 2, 3 sind über Stege 10, 11 miteinander verbunden, so dass die Führungswangen 2, 3, die Führungsleisten 6, 7 und die Stege 10, 11 eine Baueinheit bilden.

Die erfindungsgemäße Anhängevorrichtung umfasst ferner einen Kupplungsträger 12, der plattenförmig gestaltet ist. Der Kupplungsträger 12 ist horizontal ausgerichtet und trägt eine Anhängekupplung in Form einer Kugelkupplung 13. Grundsätzlich kann der Kupplungsträger 12 jedoch auch andere Anhängekupplungen, wie z. B. eine Pitonkupplung, aufweisen. Im vorliegenden Fall umfasst die Kugelkupplung 13 eine Kugel 14, die mit einer Kugelkalotte (nicht dargestellt) eines Anhängers verbindbar ist, sowie einen Niederhalter 15 zum Fixieren der Kugelkalotte auf der Kugel 14.

Der Kupplungsträger 12 ist lösbar mit dem Kupplungsbock 1 verbunden und weist hierfür an einem in Fahrtrichtung F vorderen Bereich zwei Befestigungsbohrungen 16 auf. Im montierten Zustand fluchten die Befestigungsbohrungen 16 mit Befestigungsbohrungen 17 in einem unteren der beiden Stege 10. Die Befestigungsbohrungen 16, 17 sind vertikal ausgerichtet, wobei Befestigungsschrauben 18 durch die Befestigungsbohrungen 16, 17 hindurchgeführt sind und jeweils mit einer Mutter 19 gesichert sind. Der Kupplungsträger 12 wird somit über die Befestigungsschrauben 18 mit dem unteren Steg 10 verspannt, so dass Zugkräfte, die in oder entgegen der Fahrtrichtung F wirken, über den durch die Verspannkräfte erzielten Reibschluss von dem Kupplungsträger 12 in den Steg 10 bzw. in den Kupplungsbock 1 eingeleitet werden.

Der Kupplungsträger 12 ragt nach hinten über den unteren Steg 10 vor und ist zwischen den Führungsleisten 6, 7 angeordnet. Zur Abstützung von vertikal wirkenden Stützkräften der Kugelkalotte auf die Kugel 14 sind zwei Stützelemente 20 vorgesehen, die jeweils in einer der Führungsnuten 8, 9 der Leisten 6, 7 befestigt sind. Im folgenden wird das in Fahrtrichtung F links befestigte Stützelement 20 beispielhaft für beide Stützelemente 20 näher beschrieben.

Das Stützelement 20 weist einen Führungsabschnitt 21 auf, der leistenförmig gestaltet ist und in der Nut 9 der Führungsleiste 7 der linken Führungswange 3 aufgenommen ist. Über den Führungsabschnitt 21 ist das Stützelement 20 drehsicher in der Führungsnut 9 gehalten. Von dem Führungsabschnitt 21 steht ein Bolzen 22 horizontal vor und durchdringt eine Verriegelungsbohrung 23 der Führungsleiste 7, so dass er auf der von der Führungsnut 9 abgewandten Seite der Führungsleiste 7 aus der Verriegelungsbohrung 23 vorsteht. Der Bolzen 22 ist als Gewindebolzen ausgestaltet und an dem freien Ende mit einer Gewindemutter 25 gesichert, so dass das Stützelement 20 sicher in der Nut 9 gehalten ist.

Auf der von der Führungsleiste 7 abgewandten Seite des Stützelements 20 weist dieses eine Nut 26 auf, welche eine untere Stützfläche 27 und eine obere Stützfläche 28 aufweist. Die Nuten 26 der beiden gegenüberliegenden Stützelemente 20 sind einander zugewandt und dienen dazu, den plattenförmigen Kupplungsträger 12 aufzunehmen. Die Nuten 26 verlaufen horizontal und parallel zur Fahrtrichtung F, so dass der Kupplungsträger 12 vom Heck des Zugfahrzeugs in Fahrtrichtung F nach vorne in die Nuten 26 eingeführt und nach vorne geschoben werden kann, bis die Befestigungsbohrungen 16, 17 fluchten und der Kupplungsträger 12 mit dem unteren Steg 10 verschraubt werden kann.

Der Abstand der beiden Stützflächen 27, 28 ist an die Dicke des plattenförmigen Kupplungsträgers 12 angepasst, so dass der Kupplungsträger 12 mit nur geringem Spiel zwischen den Stützflächen 27, 28 aufgenommen ist. Stützkräfte, die vertikal nach unten wirken, werden somit von der unteren Stützfläche 27 aufgenommen, wo hingegen negative Stützkräfte, die vertikal nach oben wirken, von der oberen Stützfläche 28 aufgenommen werden.

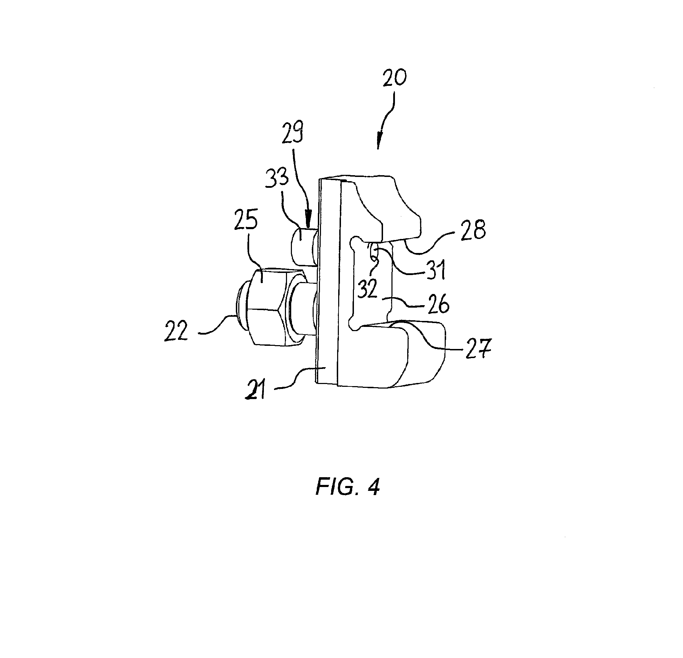

Um eine einfache Montage des Kupplungsträgers 12 zu gewährleisten, muss während der Montage ein seitliches Spiel für den Kupplungsträger 12 in den Nuten 26 vorgesehen sein. Dieses Spiel wird im vollständig montierten Zustand minimiert bzw. beseitigt. Hierzu dienen Justierelemente 29 (siehe insbesondere Fig. 4), die mit einem Gewindeabschnitt 31 in eine Gewindebohrung 32 des Stützelements 20 eingeschraubt sind und bis in die Nut 26 ragen. Die Justierelemente 29 sind als Schraube gestaltet, wobei der Schraubenkopf 33 von dem Führungsabschnitt 21 in Richtung zur jeweiligen Führungsleiste 6, 7 vorsteht und mit einer Verriegelungsbohrung 24 der jeweiligen Führungsleiste 6, 7 fluchtet. Das Justierelement 29 ist als Innensechskantschraube ausgeführt, so dass diese durch die Verriegelungsbohrung 24 in bzw. aus der Gewindebohrung 32 des Stützelements 20 geschraubt werden kann. Im eingeschobenen Zustand des Kupplungsträgers 12 können die beiden Justierelemente 29 somit seitlich in die Nuten 26 eingeschraubt werden, bis sich die Justierelemente 29 gegen den Kupplungsträger 12 abstützen und diesen seitlich halten.

### Bezugszeichenliste

- 1: Kupplungsbock
- 2: rechte Führungswange
- 3: linke Führungswange
- 4: Befestigungsabschnitt
- 5: Befestigungsabschnitt
- 6: Führungsleiste
- 7: Führungsleiste
- 8: Führungsnut
- 9: Führungsnut
- 10: Steg
- 11: Steg
- 12: Kupplungsträger
- 13: Kugelkupplung (Anhängekupplung)
- 14: Kugel
- 15: Niederhalter
- 16: Befestigungsbohrung
- 17: Befestigungsbohrung
- 18: Befestigungsschraube
- 19: Mutter
- 20: Stützelement
- 21: Führungsabschnitt
- 22: Bolzen
- 23: Verriegelungsbohrung
- 24: Verriegelungsbohrung
- 25: Gewindemutter
- 26: Nut
- 27: untere Stützfläche
- 28: obere Stützfläche
- 29: Justierelement
- 30: Zapfwelle
- 31: Gewindeabschnitt
- 32: Gewindebohrung
- 33: Schraubenkopf

- F: Fahrtrichtung

## Patentansprüche

1. Anhängevorrichtung umfassend,
einen an einem Zugfahrzeug, insbesondere Traktor, befestigbaren Kupplungsbock (1) mit zwei einander zugewandten vertikal verlaufenden Führungsnuten (8, 9), und
eine Kupplungsvorrichtung mit einem Kupplungsträger (12), der eine Anhängekupplung (13) zum Ankuppeln eines Anhängers aufnimmt, und mit zwei Stützelemente (20), die jeweils in einer der Führungsnuten (8, 9) des Kupplungsbocks (1) befestigt sind,
wobei der Kupplungsträger (12) derart gegen die Stützelemente (20) in Anlage gehalten und vertikal gegen diese abgestützt ist, dass die Stützkräfte über die Führungsnuten in den Kupplungsbock eingeleitet werden, **dadurch gekennzeichnet,**
**dass** der Kupplungsträger (12) am Kupplungsbock (1) derart lösbar befestigt ist,
**dass** horizontale Zugkräfte an einer anderen Stelle als über die Führungsnuten (8, 9) in den Kupplungsbock (1) eingeleitet werden.

2. Anhängevorrichtung nach Anspruch 1,
**dadurch gekennzeichnet,**
**dass** der Kupplungsträger (12) vertikal nach unten und vertikal nach oben gegen die Stützelemente (20) abgestützt ist.

3. Anhängevorrichtung nach einem der vorangehenden Ansprüche,
**dadurch gekennzeichnet,**
**dass** in den Führungsnuten (8, 9) in Reihe übereinander angeordnete Verriegelungsbohrungen (23, 24) vorgesehen sind und
**dass** die Stützelemente (20) jeweils in zumindest einer der Verriegelungsbohrungen (23, 24) lösbar befestigt sind.

4. Anhängevorrichtung nach Anspruch 3,
**dadurch gekennzeichnet,**
**dass** die Stützelemente (20) jeweils einen Bolzen (22), insbesondere einem Gewindebolzen, aufweisen, der durch eine der Verriegelungsbohrungen (23, 24) hindurchgeführt ist und insbesondere an einem von der Führungsnut (8, 9) abgewandten Ende mit einer Gewindemutter (25) gesichert ist.

5. Anhängevorrichtung nach einem der vorangehenden Ansprüche,
**dadurch gekennzeichnet,**
**dass** die Stützelemente (20) jeweils einen Führungsabschnitt (21) aufweisen, mit dem sie in einer der Führungsnuten (8, 9) verdrehsicher sitzen.

6. Anhängevorrichtung nach einem der vorangehenden Ansprüche,
**dadurch gekennzeichnet,**
**dass** die Stützelemente (20) einander zugewandte horizontal verlaufende Nuten (26) aufweisen, in die der Kupplungsträger (12) eingeführt ist.

7. Anhängevorrichtung nach Anspruch 6,
**dadurch gekennzeichnet,**
**dass** die Stützelemente (20) jeweils ein Justierelement (29) aufweisen, das horizontal verstellbar ist und in die Nut (26) des Stützelements (20) hineinragt.

8. Anhängevorrichtung nach Anspruch 7,
**dadurch gekennzeichnet,**
**dass** die Justierelemente (29) jeweils einen Gewindeabschnitt umfassen, der durch eine Gewindebohrung des Stützelements (20) geschraubt ist, wobei die Gewindebohrung mit einer der Verriegelungsbohrungen (23, 24) der Führungsnuten (8, 9), in der das Stützelement (20) sitzt, fluchtet.

9. Anhängevorrichtung nach einem der vorangehenden Ansprüche,
**dadurch gekennzeichnet,**
**dass** der Kupplungsbock (1) zwei jeweils eine der Führungsnuten (8, 9) aufweisende Führungswangen (2, 3) umfasst, die an einem in Fahrrichtung (F) betrachtet vorderen Bereich über eine Strebe miteinander verbunden sind, wobei der Kupplungsträger (12) an der Strebe lösbar befestigt ist.

10. Anhängevorrichtung nach einem der vorangehenden Ansprüche,
**dadurch gekennzeichnet,**
**dass** der Kupplungsträger (12) über eine reibschlüssige oder formschlüssige Verbindung mit dem Kupplungsbock (1) lösbar verbunden ist.

## Claims

1. Hitch comprising
a coupling frame (1) attachable on a towing vehicle, especially a tractor, with two guide grooves (8, 9) facing each other and extending vertically, and a coupling device with a coupling carrier (12), which receives a coupling (13) for coupling a trailer, and with two support elements (20), which respectively are fixed in one of the guide grooves (8, 9) of the coupling bracket (1),
wherein the coupling carrier (12) is held in abutment against the support elements (20) and is supported vertically against these such, that the support forces are introduced via the guide grooves into the coupling frame,
**characterised in**
**that** the coupling carrier (12) is detachably mounted on the coupling frame (1) such, that horizontal drag forces are introduced at a different position than via the guide grooves (8, 9) into the coupling frame (1).

2. Hitch according to claim 1,
**characterised in**
**that** the coupling carrier (12) is supported vertically downwards and vertically upwards on the support elements (20).

3. Hitch according to one of the preceding claims,
**characterised in**
**that** in the guide grooves (8, 9) locking bores (23, 24), arranged in a line above each other, are provided, and
**that** the support elements (20) are respectively detachably fixed in at least one of the locking bores (23, 24).

4. Trailer hitch according to claim 3,
**characterised in**
**that** the support elements (20) have respectively a pin (22), especially a threaded pin, which is passed through one of the locking bores (23, 24) and is particularly secured at an end, facing away from the guide groove (8, 9), by a threaded nut (25).

5. Trailer hitch according to one of the preceding claims,
**characterised in**
**that** the support elements (20) have respectively one guide portion (21), with which they rest non-rotationally in one of the guide grooves (8, 9).

6. Trailer hitch according to one of the preceding claims,
**characterised in**
**that** the support elements (20) have grooves (26), facing each other and extending horizontally, and in which the coupling carrier (12) is inserted.

7. Trailer hitch according to claim 6,
**characterised in**
**that** the support elements (20) have respectively an adjustment element (29), which is horizontally displaceable and projects into the groove (26) of the support element (20).

8. Trailer hitch according to claim 7,
**characterised in**
**that** the adjustment elements (29) comprise respectively a threaded portion, which is screwed through a threaded bore of the support element (20), wherein the threaded bore aligns with one of the locking bores (23, 24) of the guide grooves (8, 9), in which the support element (20) rests.

9. Trailer hitch according to one of the preceding claims,
**characterised in**
**that** the coupling frame (1) comprises two guide plates (2, 3) having respectively one of the guide grooves (8, 9), which guide plates (2, 3) are connected to each other at a front portion, when seen in driving direction (F), by a web, wherein the coupling carrier (12) is detachably attached to the web.

10. Trailer hitch according to one of the preceding claims,
**characterised in**
**that** the coupling carrier (12) is detachably connected via a frictionally engaged or form-fitting connection to the coupling frame (1).

## Revendications

1. Dispositif d'accrochage, comprenant
un chevalet d'attelage (1) pouvant être fixé à un véhicule de traction, en particulier un tracteur, et comportant deux rainures de guidage orientées verticalement et tournées l'une vers l'autre (8, 9),
et
un dispositif d'attelage comportant un support d'attelage (12) qui reçoit un attelage d'accrochage (13) permettant le couplage d'une remorque et deux éléments de soutien (20) qui sont fixés respectivement dans une des rainures de guidage (8, 9) du chevalet d'attelage (1),
le support d'attelage (12) étant maintenu en contact contre les éléments de soutien (20) et s'appuyant verticalement contre ceux-ci,
que les forces de soutien sont conduites par les rainures de guidage dans le chevalet d'attelage, **caractérisé en ce que**
le support d'attelage (12) est fixé au chevalet d'attelage (1) de manière amovible de sorte que des forces de traction horizontales soient conduites à un autre endroit que via les rainures de guidage (8, 9) dans le chevalet d'attelage (1).

2. Dispositif d'accrochage selon la revendication 1,
**caractérisé en ce que**
le support d'attelage (12) s'appuie verticalement vers le bas et verticalement vers le haut contre les éléments de soutien (20).

3. Dispositif d'accrochage selon une des revendications précédentes,
**caractérisé en ce qu'**il est prévu dans les rainures de guidage (8, 9) des trous de verrouillage (23, 24) disposés superposés en série et
que les éléments de soutien (20) sont fixés respectivement de manière dissociable dans au moins un des trous de verrouillage (23, 24).

4. Dispositif d'accrochage selon la revendication 3,
**caractérisé en ce que**
les éléments de soutien (20) présentent respectivement un goujon (22), en particulier un goujon fileté, qui passe à travers un des trous de verrouillage (23, 24) et est en particulier bloqué à une extrémité détournée de la rainure de guidage (8, 9) par un écrou fileté (25).

5. Dispositif d'accrochage selon une des revendications précédentes,
**caractérisé en ce que**
les éléments de soutien (20) présentent respectivement une section de guidage (21) par laquelle ils sont assis de marnière à ne pas pouvoir tourner dans les rainures de guidage (8, 9).

6. Dispositif d'accrochage selon une des revendications précédentes,
**caractérisé en ce que**
les éléments de soutien (20) présentent des rainures orientées horizontalement et tournées les unes vers les autres (26) dans lesquelles les supports d'attelage (12) sont introduits.

7. Dispositif d'accrochage selon la revendication 6,
**caractérisé en ce que**
les éléments de soutien (20) présentent respectivement un élément d'ajustement (29) qui est réglable horizontalement et dans lequel dépasse la rainure (26) de l'élément de soutien (20).

8. Dispositif d'accrochage selon la revendication 7,
**caractérisé en ce que**
les éléments d'ajustement (29) comprennent respectivement une section filetée qui est vissée dans un trou fileté de l'élément de soutien (20), le trou fileté étant aligné avec un des trous de verrouillage (23, 24) des rainures de guidage (8, 9) dans lequel l'élément de soutien (20) est assis.

9. Dispositif d'accrochage selon une des revendications précédentes,
**caractérisé en ce que**
le chevalet d'attelage (1) comprend deux joues de guidage (2, 3) présentant respectivement une des rainures de guidage (8, 9) qui sont reliées entre elles dans une partie avant, vue dans le sens de circulation (F), par une traverse, le support d'attelage (12) étant fixé de manière dissociable à la traverse.

10. Dispositif d'accrochage selon une des revendications précédentes, **caractérisé en ce que**
le support d'attelage (12) est relié de manière dissociable au chevalet d'attelage (1) par une connexion à correspondance de frottement ou à correspondance géométrique.
